(19) **Europäisches Patentamt**
**European Patent Office**
**Office européen des brevets**

(11) **EP 3 575 143 B1**

(12) **EUROPEAN PATENT SPECIFICATION**

(45) Date of publication and mention
of the grant of the patent:
**15.09.2021 Bulletin 2021/37**

(51) Int Cl.:
*B60N 2/427* (2006.01)    *B60N 2/22* (2006.01)
*B60N 2/64* (2006.01)    *B60N 2/68* (2006.01)
*B60N 2/42* (2006.01)    *B60N 2/06* (2006.01)

(21) Application number: **18744440.1**

(86) International application number:
**PCT/JP2018/001703**

(22) Date of filing: **22.01.2018**

(87) International publication number:
**WO 2018/139384 (02.08.2018 Gazette 2018/31)**

(54) **VEHICULAR SEAT STRUCTURE**

FAHRZEUGSITZSTRUKTUR

STRUCTURE DE SIÈGE DE VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.01.2017 JP 2017010471**

(43) Date of publication of application:
**04.12.2019 Bulletin 2019/49**

(73) Proprietor: **Suzuki Motor Corporation
Hamamatsu, Shizuoka 432-8611 (JP)**

(72) Inventors:
• **YASUIKE, Shigeaki**
**Hamamatsu-shi, Shizuoka 432-8611 (JP)**
• **KOMURA, Shogo**
**Hamamatsu-shi, Shizuoka 432-8611 (JP)**
• **SAKURAI, Akihiro**
**Hamamatsu-shi, Shizuoka 432-8611 (JP)**
• **KIKUCHI, Ryo**
**Yokohama-shi, Kanagawa 222-0033 (JP)**
• **ANDO, Yukinori**
**Yokohama-shi, Kanagawa 222-0033 (JP)**

(74) Representative: **Freischem & Partner
Patentanwälte mbB
Salierring 47-53
50677 Köln (DE)**

(56) References cited:
EP-A1- 2 325 041    EP-A1- 2 891 580
WO-A2-2009/114660    JP-A- 2004 016 710
JP-A- 2014 159 264    JP-A- 2015 030 341
JP-U- S6 177 846    US-A1- 2015 203 013

## Description

## Technical Field

The present invention relates to a vehicular seat structure.

Background Art

A vehicular seat is provided with a seat cushion on which an occupant is seated, and a seat back that supports upper limbs of an occupant. There is known a frame configuring the seat back, which is formed of a resin material such as a fiber-reinforced composite material, as disclosed in JP 2005-334364 A, for example.

The frame as disclosed in Patent Literature 1 includes a vertical frame and a lateral frame. The frame is provided with a lateral beam part that is bridged over laterally to bear a lateral load.

The frame has sufficient durability and seat rigidity in regular use. On the other hand, at the time of receiving a collision load in a vehicle collision, the frame is configured to absorb the collision energy by a weak part provided in the frame.

JP 2004-016710 A discloses a seat back for vehicles 20 that includes a pair of left and right vertically extending side frames 22, an upper frame 21 disposed between the upper end parts of the side frames 22 and a lower frame 23 disposed between lower end parts. The frames are molded separately from each other with resin. Further similar vehicle seat structures are, for example, disclosed in US 2015 203 013 A1, in WO 2009 114 660 A2, in EP 2 891 580 A1 and in EP 2 325 041 A1.

Summary of Invention

## Technical Problem

The structure as described above is configured to absorb the collision energy by breakage or plastic deformation of the weak part in the fiber-reinforced composite material, but the breakage or plastic deformation is possibly performed locally. Meanwhile, in a case of the frame formed of a metallic material, the frame is entirely deformed to absorb the collision energy. Therefore, the frame formed of the fiber-reinforced composite material has a possibility that an absorption efficiency of the collision energy is lower than that of the frame formed of the metallic material.

In a case of providing the weak part on the frame formed of the fiber-reinforced composite material, when the weak part is broken at the collision, there is a possibility of it being unable to support the occupant (the upper limbs).

In the example, on receiving the impact load at the vehicle collision, there is a mode in which the frame is bent to the backward side of the vehicle and a mode in which the lateral beam part of the frame is projected to the backward side of the vehicle, for example, is bent in a <-letter shape.

When the lateral beam part is bent in the <-letter shape, a front part of the frame to which the lateral beam part is joined is possibly rotated and twisted toward a seat central part. This deformation possibly creates a deviation load to a reclining mechanism provided in a lower part of the frame, for example. In a case in which the fastening in the periphery of the reclining mechanism has a section vulnerable to the deviation load, the occurrence of the mode in which the lateral beam part is bent in the <-letter shape is not desirable.

Further, when frame members configuring the frame are all formed of a fiber-reinforced composite material, the material cost will possibly amount to a high value.

The present invention is made to solve the foregoing problems, and an object of the present invention is to provide a vehicular seat structure that can ensure the rigidity of a seat back frame at the regular use and sufficiently absorb the collision energy at the vehicle collision.

## Solution to Problem

To achieve the object, a vehicular seat structure according to the present invention comprises a seat back frame made of resin, the seat back frame extending in a vehicle vertical direction; and a seat cushion frame made of resin, the seat cushion frame extending toward a vehicle forward side from a lower part of the seat back frame, the seat back frame including longitudinal frame parts that extend in the vehicle vertical direction and are arranged in both side parts in a vehicle width direction to be spaced away from each other. In the vehicular seat structure, each of the longitudinal frame parts has a lower part to which a lower bracket extending in a vehicle vertical direction is joined, the lower brackets (31) are formed of a metallic material. Furthermore, in the vehicular seat structure, an upper through hole into which a lower cross member extending in the vehicle width direction is inserted is formed in an upper portion of each of the lower brackets, the two longitudinal frame parts are connected by the lower cross member through the respective lower brackets, and the longitudinal frame parts are formed of a carbon fiber-reinforced resin material, so that the lower bracket is lower in rigidity than the longitudinal frame parts.

## Advantageous Effects of Invention

According to the present invention, the seat back frame configuring the vehicular seat structure can ensure the rigidity at the regular use and sufficiently absorb the collision energy at the vehicle collision.

**Brief Description of Drawings**

Figure 1 is a schematic perspective view showing an embodiment of a vehicular seat structure according to the present invention.

Figure 2 is a schematic perspective view showing a seat cushion frame, a seat back frame and the like in a vehicular seat in Figure 1.

Figure 3 is an exploded perspective view showing a state before a lower bracket and the like are attached to a right longitudinal frame in Figure 2.

Figure 4 is a side view showing a state in which the right longitudinal frame is connected to a right cushion frame in Figure 3.

**Description of Embodiment**

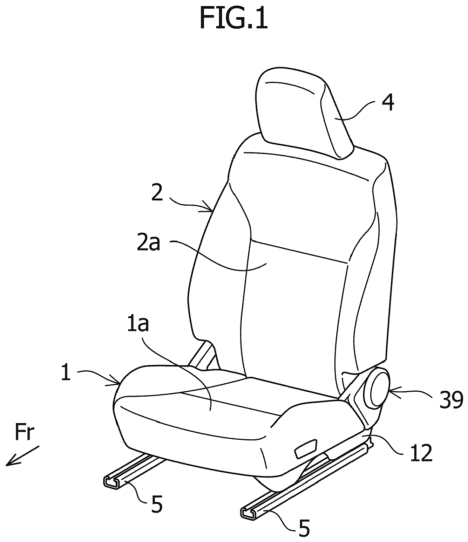

Hereinafter, an explanation will be made of an embodiment of a vehicular seat structure according to the present invention with reference to the drawings (Figures 1 to 4).

The vehicular seat structure according to the present embodiment will be explained by taking a vehicular seat for a single occupant such as an operator's seat or a front occupant seat as an example. The vehicular seat is provided with a seat cushion 1, a seat back 2 and a headrest 4.

First, an explanation will be made of the seat cushion 1. The seat cushion 1 has, as shown in Figure 1, a seating surface part 1a on which an occupant is seated. The seat cushion 1 is configured to be slidable on rails 5 installed on an unillustrated vehicle body floor panel. An explanation on a slide mechanism for sliding the seat cushion 1 is omitted.

Seat cushion frames 11, 12 are provided in the inside of the seat cushion 1. In addition, at least three metallic pipe members are attached to the seat cushion frames 11, 12. An explanation will later be made of the pipe members.

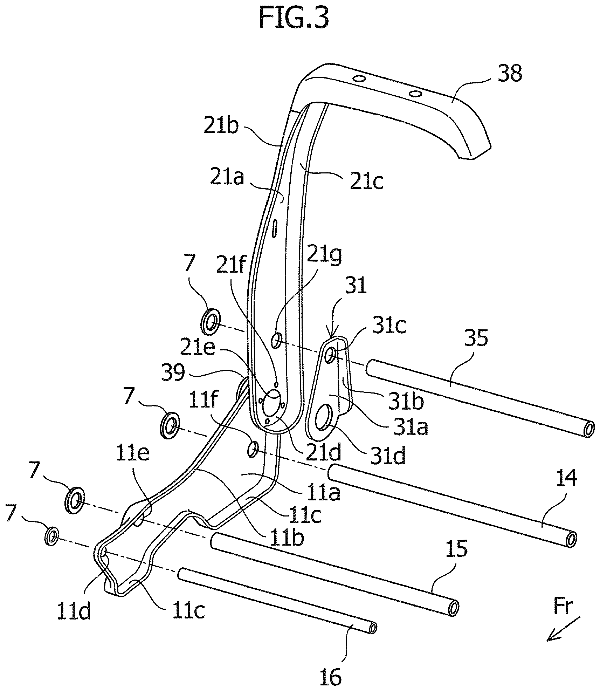

The seat cushion frames 11, 12 are configured of a right seat cushion frame 11 and a left seat cushion frame 12. The right and left herein correspond to the right and left when an occupant seated on the vehicular seat is looking at a vehicle forward side. That is, Figure 3 shows primarily members in the right side.

The right seat cushion frame 11 is a member that is formed of a carbon fiber-reinforced resin material, and extends in the vehicle front-back direction in a state of being erect relative to the vehicle body floor panel. The right seat cushion frame 11 includes a primary part 11a having side surfaces exposed to the outer side and the inner side in the vehicle width direction, and a flange part 11b extending from an edge end of the primary part 11a to the central side in the seat width direction, and the primary part 11a and the flange part 11b are integrally formed.

As shown in Figure 3, three through holes (front part through hole 11d, central through hole 11e and rear part through hole 1 lf) are formed in the primary part 11a of the right seat cushion frame 11, and are arranged to be spaced away from each other in the vehicle front-back direction. The through holes 11d, 11e, 11f are provided for attaching pipe members which will be described later. The connection between the through holes 11d, 11e, 11f and the pipe members will be explained later.

A notch part is formed on the central part in the vehicle front-back direction in a lower part of the right seat cushion frame 11, and a lower flange part 11c in a section closer to the vehicle forward side and a lower flange part 11c in a section closer to the vehicle backward side than the notch part are configured to be slidable on the rail 5.

The left seat cushion frame 12 is, as in the case of the right seat cushion frame 11, a plate-shaped member that is formed of a carbon fiber-reinforced resin material and extends in the vehicle front-back direction in a state of erecting to the vehicle body floor panel. The left seat cushion frame 12 includes a primary part 11a and a flange part 12b, and the primary part 12a and the flange part 12b are integrally formed. In addition, the illustration is omitted, but as in the case of the primary part 11a of the right seat cushion frame 11, a front part through hole, a central through hole and a rear part through hole are formed in the primary part 12a.

A notch part is, as in the case of the right seat cushion frame 11, formed on the left seat cushion frame 12 as well, and a lower flange part 12c in a section closer to the vehicle forward side and a lower flange part 12c in a section closer to the vehicle backward side than the notch part are respectively configured to be slidable on the rail 5.

The right seat cushion frame 11 and the left seat cushion frame 12 are arranged in the right and left (in both the side parts in the seat width direction) of the seating surface part 1a of the seat cushion 1 and are arranged in parallel to be spaced away from each other in the seat width direction and to be paired. At this time, the front part through hole 11d, the central through hole 11e and the rear part through hole 11f of the right seat cushion frame 11, and the front part through hole, the central through hole and the rear part through hole of the left seat cushion frame 12 are arranged such that the respective positions in the vehicle front-back direction therebetween are the same.

Subsequently an explanation will be made of the pipe members. At least three pipe members (cushion Rr cross pipe 14, cushion Fr cross pipe 15 and cushion member pipe 16) are arranged between the right seat cushion frame 11 and the left seat cushion frame 12.

The cushion Rr cross pipe 14 is a metallic pipe member extending in the vehicle width direction to connect a rear part of the right seat cushion frame 11 and a rear part of the left seat cushion frame 12. A push nut 7 is attached to a right end part of the cushion Rr cross pipe 14 in a state of penetrating the rear part through hole 11f of the right seat cushion frame 11, and the right end part of the cushion Rr cross pipe 14 is fixed by an adhesive agent. A left end part of the cushion Rr cross pipe 14 is fixed in the similar manner in a state of penetrating the rear part through hole of the left seat cushion frame 12.

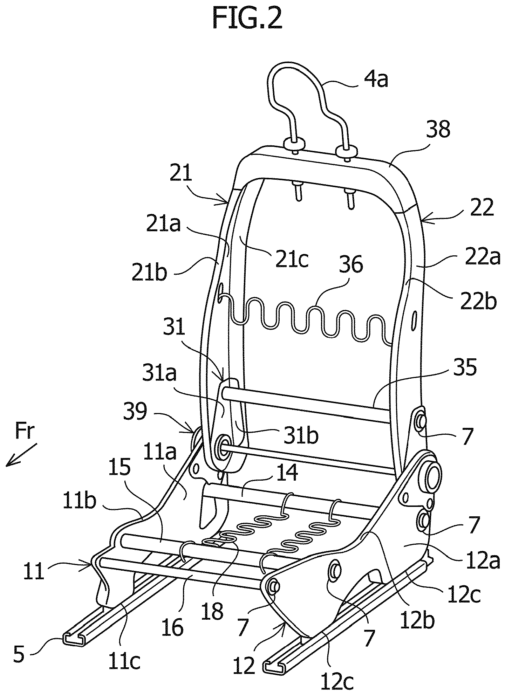

The cushion Fr cross pipe 15 is a metallic pipe member extending in the vehicle width direction to connect a portion slightly closer to a front part than the center of the right seat cushion frame 11 in the vehicle front-back direction and the corresponding portion of the left seat cushion frame 12. As shown in Figure 2 and Figure 3, a push nut 7 is attached to a right end part of the cushion Fr cross pipe 15 in a state of penetrating the central through hole 11e of the right seat cushion frame 11, and the right end part of the cushion Fr cross pipe 15 is fixed by an adhesive agent. A left end part of the cushion Rr cross pipe 14 is fixed in the similar manner in a state of penetrating the central through hole of the left seat cushion frame 12.

The cushion member pipe 16 is a metallic pipe member extending in the vehicle width direction to connect a front part of the right seat cushion frame 11 and a front part of the left seat cushion frame 12. As shown in Figure 2 and Figure 3, a push nut 7 is attached to a right end part of the cushion member pipe 16 in a state of penetrating the front part through hole 11d of the right seat cushion frame 11, and the right end part of the cushion member pipe 16 is fixed by an adhesive agent. A left end part of the cushion member pipe 16 is fixed in the similar manner in a state of penetrating the front part through hole of the left seat cushion frame 12.

Front-back direction springs 18 are attached to the cushion Rr cross pipe 14 and the cushion Fr cross pipe 15 to extend in the vehicle front-back direction to bridge over between the cushion Rr cross pipe 14 and the cushion Fr cross pipe 15. In this example, the two front-back direction springs 18 are arranged to be spaced away from each other in the seat width direction.

Next, an explanation will be made of the seat back 2. The seat back 2 is a member having a backrest part 2a that can support upper limbs of an occupant. The seat back 2 is configured to be relatively rotatable to the seat cushion 1 by a reclining mechanism 39. The headrest 4 is detachably attached to an upper part of the seat back 2.

A seat back frame configuring a framework of the seat back 2 is provided in the inside of the seat back 2. Hereinafter, an explanation will be made of the seat back frame. The seat back frame has, as shown in Figure 2, a right longitudinal frame (a longitudinal frame part) 21 and a left longitudinal frame (a longitudinal frame part) 22.

The right longitudinal frame 21 and the left longitudinal frame 22 are arranged in the right and left (in both the side parts in the seat width direction) of the backrest part 2a of the seat back 2 and are arranged in parallel to be spaced away from each other in the seat width direction and to be paired.

The right longitudinal frame 21 is, as shown in Figure 2 and Figure 3, a member extending from a rear part of the right seat cushion frame 11 to the vehicle upward side, and is rotatably attached to the right seat cushion frame 11 through the reclining mechanism 39. The right longitudinal frame 21 includes a longitudinal wall part 21a having a surface exposed to an outer side and an inner side in the vehicle width direction, and flange parts 21b, 21c extending from an edge end of the longitudinal wall part 21a to the central side in the seat width direction, which are integrally formed.

The rear flange part 21c extending from a rear end of the longitudinal wall part 21a to the central side in the seat width direction is longer in an extension length (a length in the seat width direction) than the front flange part 21b extending from a front end of the longitudinal wall part 21a to the central side in the seat width direction. A reverse <-letter shaped plane cross section opening to the central side in the seat width direction is formed by the longitudinal wall part 21a, the front flange part 21b and the rear flange part 21c.

A lower part of the longitudinal wall part 21a is provided with an installation part 21d for attaching the reclining mechanism 39. The installation part 21d in this example has one large diameter hole 21e and four small diameter holes 21f arranged in a radial outer side of the large diameter hole 21e. The small diameter holes 21f are arranged to be equally spaced from each other in the periphery of the large diameter hole 21e. The reclining mechanism 39 is attached to the holes 21e, 21f by fastening members or the like. A detailed explanation of the reclining mechanism 39 is omitted, but main bodies of the reclining mechanism 39 are arranged to both the outer sides of the right and left longitudinal frames 21, 22 in the seat width direction, and are connected by a pipe to form the reclining mechanism 39.

A through hole 21g is formed in the longitudinal wall part 21a above the installation part 21d. The through hole 21g is provided for attaching a lower cross member pipe 35, which will be described later. A right lower bracket 31 is joined to a position in which the through hole 21g is formed. The details of the position of the through hole 21g will be described later. In addition, the details of the right lower bracket 31 will be also described later.

Subsequently an explanation will be made of the left longitudinal frame 22. The left longitudinal frame 22 is a member extending from a rear part of the left seat cushion frame 12 to the vehicle upward side, and is rotatably attached to the left seat cushion frame 12 through the reclining mechanism 39. The left longitudinal frame 22 includes, as in the case of the right longitudinal frame 21, the longitudinal wall part 22a, and the front flange part 22b and the rear flange part, which are integrally formed to configure a reverse <-letter shaped plane cross section opening to the central side in the seat width direction.

Although omitted in illustration, a lower part of the longitudinal wall part 22a of the left longitudinal frame 22 is, as in the case of the longitudinal wall part 21a of the right longitudinal frame 21, provided with an installation part for attaching the reclining mechanism 39. A through hole is formed in the longitudinal wall part 22a above the installation part to attach the lower cross member pipe 35.

Subsequently an explanation will be made of the right lower bracket 31. The right lower bracket 31 is a member that is attached to a lower part of the right longitudinal frame 21 and extends in the vehicle vertical direction. The right lower bracket 31 includes, as shown in Figure 2 and Figure 3, an outer wall part 31a that is exposed to the outer side and the central side in the seat width direction and has a side surface extending in the vehicle vertical direction, and a rear wall part 31b extending to the central side in the seat width direction from a rear end of the outer wall part 31a, which are integrally formed.

An upper through hole 31c and a lower through hole 31d are, as shown in Figure 3, formed in the outer wall part 31a. The upper through hole 31c and the lower through hole 31d are arranged to be spaced away from each other in the vehicle vertical direction. The lower cross member pipe 35 is inserted in the upper through hole 31c, and the reclining mechanism 39 is attached to the lower through hole 31d.

A side surface of the outer wall part 31a in the outer side in the seat width direction is formed as a flat surface extending in the vehicle vertical direction, and is joined (bonded) on a surface of the longitudinal wall part 21a of the right longitudinal frame 21 in the central side in the seat width direction by an adhesive agent. In addition, a rear surface of the rear wall part 31b is formed as a flat surface extending in the vehicle vertical direction, and is bonded on the rear flange part 21c of the right longitudinal frame 21 by an adhesive agent.

Next, explanation will be given of the left lower bracket. The left lower bracket is, although omitted in illustration, a member that is attached to a lower part of the left longitudinal frame 22 and extends in the vehicle vertical direction. The left lower bracket includes, as in the case of the right lower bracket 31, an outer wall part and a rear wall part, which are integrally formed. An upper through hole and a lower through hole are formed also in an outer wall part of the left lower bracket.

A side surface of the outer wall part in the outer side in the seat width direction is formed as a flat surface, and is bonded on a surface of the longitudinal wall part 22a of the left longitudinal frame 22 in the central side in the seat width direction by an adhesive agent. In addition, a rear surface of the rear wall part is formed as a flat surface, and is bonded on the rear flange part of the left longitudinal frame 22 by an adhesive agent.

The lower cross member pipe 35 extends in the seat width direction (in the vehicle width direction) to connect the right longitudinal frame 21 and the left longitudinal frame 22 in a state through the right lower bracket 31 and the left lower bracket. The lower cross member pipe 35 is formed of a metallic material.

The lower cross member pipe 35 connects a section of the right longitudinal frame 21 slightly lower than the center in the vehicle vertical direction and the corresponding section of the left longitudinal frame 22. As shown in Figure. 3, a right end part of the lower cross member pipe 35 is fixed by a push nut 7 in a state of penetrating the upper through hole 31c of the right lower bracket 31 and penetrating the through hole 21g of the right longitudinal frame 21. The lower cross member pipe 35 is joined to the right lower bracket 31 by welding in a state of penetrating the upper through hole 31c. A left end part of the lower cross member pipe 35 is fixed in the similar manner in a state of penetrating the upper through hole of the left lower bracket and penetrating the through hole of the left longitudinal frame 22.

The seat back frame has an upper cross member 38 that connects an upper part of the right longitudinal frame 21 and an upper part of the left longitudinal frame 22. The upper cross member 38 is formed of a carbon fiber-reinforced resin material, for example. A headrest frame 4a is attached to the upper cross member 38, and the headrest 4 is installed to cover the headrest frame 4a. In addition, a width direction spring 36 is disposed above the lower cross member pipe 35 and under the upper cross member 38 to bridge over between the right longitudinal frame 21 and the left longitudinal frame 22.

The right lower bracket 31 and the left lower bracket are lower in rigidity than the right longitudinal frame 21 and the left longitudinal frame 22. In this example, the right lower bracket 31 and the left lower bracket are each formed by a metallic material lower in rigidity than a carbon fiber-reinforced resin material.

By configuring the lower bracket and the longitudinal frame with different rigidity, a deformation load in the vehicle backward side acting on the lower cross member pipe 35 can be absorbed by a plastic deformation of the lower bracket 31 when the vehicle receives a collision load from the backward side.

In the present embodiment, the impact energy generated at the vehicle collision is absorbed by the lower bracket 31 formed not of a fiber-reinforced composite material that poor in energy absorption efficiency by plastic deformation or breakage, but of a metallic material.

At the collision from the forward side (at the front collision), the collision energy at the front collision can be absorbed by the plastic deformation of the cushion Rr cross pipe 14, the cushion Fr cross pipe 15 and the cushion member pipe 16 connecting the right seat cushion frame 11 and the left seat cushion frame 12.

Meanwhile, at the collision from the backward side (at the rear collision), the collision energy at the rear collision can be absorbed by the plastic deformation of the lower cross member pipe 35 formed of the metallic material. On receiving the impact load at the rear collision, there are a mode in which the seat back frame (the right longitudinal frame 21 and the left longitudinal frame 22) is bent in the vehicle backward side and a mode in which the lower cross member pipe 35 is bent in the vehicle backward side.

When the lower cross member pipe 35 is bent in the vehicle backward side, for example, in a <-letter shape, the front part of the seat back frame (the right longitudinal frame 21 and the left longitudinal frame 22) is twisted and rotated to the central side in the seat width direction following it to generate the deviation load to the reclining mechanism 39.

In the present embodiment, as described above, the reclining mechanism 39 is attached to the lower part of each of the right longitudinal frame 21 and the left longitudinal frame 22. The reclining mechanism 39 is attached to the installation part 21d of the right longitudinal frame 21 and the installation part of the left longitudinal frame 22.

The right longitudinal frame 21 is clamped by a flat side surface of the outer wall part 31a of the right lower bracket 31 in the outer side in the seat width direction and the right reclining mechanism 39. Likewise, the left longitudinal frame 22 is clamped by a flat side surface of the outer wall part of the left lower bracket in the outer side in the seat width direction and the left reclining mechanism 39.

With this clamping, the lower bracket 31 can function as an inner bracket that fixes the reclining mechanism 39 from the inner side in the seat width direction of each of the right longitudinal frame 21 and the left longitudinal frame 22. That is, the lower bracket 31 can function as the inner bracket as well.

In this case, a structure is possible in which an adhesive agent is applied only to a section in which each of the longitudinal frames 21, 22 is clamped with the lower bracket 31, and no adhesive agent is applied to the periphery of a section to which the lower cross member pipe 35 is joined. For example, it is possible to apply an adhesive agent to only an area closer to a lower side than the upper through hole 31c in the outer wall part 31a of the right lower bracket 31. The same can be applied to the left lower bracket as well.

As a result, since it is possible to deform only the periphery of the section in the lower bracket 31 to which the lower cross member pipe 35 is joined, for example, only the periphery of the upper through hole 31c at the input of the collision load, an influence of the deformation to the reclining mechanism 39 can be suppressed, and the impact energy can be absorbed. The same can be applied to the left lower bracket as well.

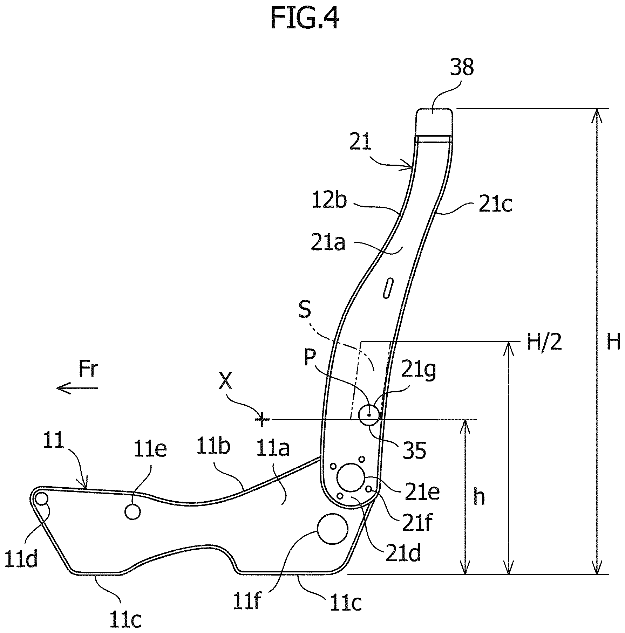

Here, an explanation will be made of the position of the lower cross member pipe 35 in the vehicle vertical direction with reference to Figure 4. The position P of the lower cross member pipe 35 in the vehicle vertical direction in this example shows a distance from a lower end of the right seat cushion frame 11 and the left seat cushion frame 12. The distance is substantially equal to that from an upper surface of the vehicle body floor panel. "P" in this example shows a center of a circular cross section of the lower cross member pipe 35.

The position P of the lower cross member pipe 35 in the vehicle vertical direction is set to satisfy "Expression 1" to a vehicle vertical direction distance h from the lower end of the right seat cushion frame 11 and the left seat cushion frame 12 to a position corresponding to a hip point X of an occupant and to a distance H from the lower end of the right seat cushion frame 11 and the left seat cushion frame 12 to an upper end (an upper end of the upper cross member) of the seat back frame.

$$h \leq P \leq H/2 \qquad \ldots (1)$$

The hip point X in Figure 4 shows a position in a general range. In addition, a vehicle front-back position of the lower cross member pipe 35 is, as shown in Figure 4, set slightly closer to the vehicle backward side than the central part in the vehicle front-back direction width of the right longitudinal frame 21 and the left longitudinal frame 22. In this example, the lower cross member pipe 35 can be disposed in a section as shown in an area S in Figure 4.

By setting the position of the lower cross member pipe 35 as described above, it is possible to reduce the probability of the lower cross member pipe 35 hitting an occupant (human body) in regular use. Therefore, the seat rigidity can be ensured without damaging the ride quality of occupants. Only on receiving an impact load at the rear collision, a hip of the human body hits the lower cross member pipe 35, thus making it possible to transmit the load efficiently.

The explanation of the present embodiment is an example for explaining the present invention, and does not limit the invention described in the scope of claims. Further, each component of the present invention is not limited to that of the embodiment, but can be variously modified within a technical range in the description of claims.

In the embodiment, the lower bracket in the present embodiment is formed of a metallic material, but it is not limited thereto. Any material that is more likely to be deformed than the seat back frame (the right longitudinal frame 21 and the left longitudinal frame 22) formed of a fiber-reinforced resin material may be adopted.

For example, four recess-shaped parts may be provided in the lower cross member 35 as a starting point of plastically deforming the lower cross member 35. In this case, the two recess-shaped parts may be arranged in the front part of the lower cross member 35 to be spaced away from each other in the seat width direction, and the two recess-shaped parts may be arranged also in the rear part of the lower cross member 35 to be spaced away from each other in the seat width direction. For performing the energy absorption by plastic deformation by providing four recess-shaped parts as weak parts in the lower cross member pipe 35, the metallic lower cross member pipe 35 can be deformed in a hat shape to suppress the mode in which the right and left longitudinal frames 21, 22 of the seat back frame are twisted and suppress the load in the deviation direction to the reclining mechanism 39.

The seat back frame 20 of the present embodiment has the two longitudinal frames 21, 22, which are connected by the upper cross member 38, but are not limited thereto. The two longitudinal frames 21, 22 may be integrally formed.

## Reference Signs List

1       Seat cushion
1a      Seating surface part
2       Seat back
2a      Backrest part
4       Headrest
4a      Headrest frame
5       Rail
7       Push nut
11      Right seat cushion frame
11a     Primary part
11b     Flange part
11c     Lower flange part
11d     Front part through hole
11e     Central through hole
11f     Rear part through hole
12      Left seat cushion frame
12a     Primary part
12b     Flange part
12c     Lower flange part
14      Cushion Rr cross pipe
15      Cushion Fr cross pipe
16      Cushion member pipe
18      Front-back direction spring
21      Right longitudinal frame (longitudinal frame part)
21a     Longitudinal wall part
21b     Front flange part
21c     Rear flange part
21d     Installation part
21e     Large diameter hole
21f     Small diameter hole
21g     Through hole
22      Left longitudinal frame (longitudinal frame part)
22a     Longitudinal wall part
22b     Front flange part
31      Right lower bracket
31a     Outer wall part
31b     Rear wall part
31c     Upper through hole
31d     Lower through hole
35      Lower cross member pipe (lower cross member)
36      Width direction spring
38      Upper cross member
39      Reclining mechanism

## Claims

1.  A vehicular seat structure comprising: a seat back frame (20) made of resin, the seat back frame (20) extending in a vehicle vertical direction; and a seat cushion frame (11,12) made of resin, the seat cushion frame (11,12) extending toward a vehicle forward side from a lower part of the seat back frame (20), the seat back frame (20) including longitudinal frame parts (21,22) that extend in the vehicle vertical direction and are arranged in both side parts in a vehicle width direction to be spaced away from each other, wherein

    each of the longitudinal frame parts (21,22) has a lower part to which a lower bracket (31) extending in a vehicle vertical direction is joined, the lower brackets (31) are formed of a metallic material,

    **characterized in that**

    an upper through hole (31c) into which a lower cross member (35) extending in the vehicle width direction is inserted is formed in an upper portion of each of the lower brackets (31), the two longitudinal frame parts (21,22) are connected by the lower cross member (35) through the respective lower brackets (31), and the longitudinal frame parts (21,22) are formed of a carbon fiber-reinforced resin material, so that the lower bracket (31) is lower in rigidity than the longitudinal frame parts (21,22).

2.  The vehicular seat structure according to claim 1, wherein

    the lower cross member is formed of a metallic material, and the lower bracket (31) is bonded and joined to the lower part of each of the longitudinal frame parts (21,22).

3.  The vehicular seat structure according to claim 1 or 2, wherein

    a reclining mechanism (39) is attached to the lower parts of the longitudinal frame parts (21,22), the lower bracket (31) has a plane part extending in the vehicle vertical direction, the plane part is bonded in a state of facing the longitudinal frame part (21,22), and the longitudinal frame part (21,22) is clamped by the plane part and the reclining mechanism (39).

4.  The vehicular seat structure according to any one of claims 1 to 3, wherein

a position P of the lower cross member (35) in the vehicle vertical direction is set to satisfy

$$h \leq P \leq H/2,$$

where a vehicle vertical distance from a lower end of the seat cushion frame (11,12) to a position corresponding to a hip point of an occupant is h and a distance from the lower end of the seat cushion frame (11,12) to an upper end of the seat back frame (20) is H, and the position P of the lower cross member in the vehicle front-back direction is set closer to a vehicle backward side than a central part of a width of the longitudinal frame part (21,22) in the vehicle front-back direction.

## Patentansprüche

1. Fahrzeugsitzstruktur, umfassend: einen aus Harz hergestellten Rückenlehnenrahmen (20), wobei sich der Rückenlehnenrahmen (20) in vertikaler Fahrzeugrichtung erstreckt; und einen aus Harz hergestellten Polsterrahmen (11, 12), wobei sich der Polsterrahmen (11, 12) von einem unteren Teil des Rückenlehnenrahmens (20) in Richtung einer Fahrzeugvorderseite erstreckt, wobei der Rückenlehnenrahmen (20) Rahmenlängsteile (21, 22) aufweist, die sich in vertikaler Fahrzeugrichtung erstrecken und an beiden in einer Fahrzeugbreitenrichtung seitlichen Teilen angeordnet sind, um voneinander beabstandet zu sein, wobei

jedes der Rahmenlängsteile (21, 22) ein Unterteil aufweist, mit dem ein unterer, sich in vertikaler Fahrzeugrichtung erstreckender Halter (31) verbunden ist, die unteren Halter (31) aus einem metallischen Werkstoff bestehen,

**dadurch gekennzeichnet, dass**

in einem oberen Abschnitt jedes der unteren Halter (31) ein oberes Durchgangsloch (31c) ausgebildet ist, in das ein unterer Querträger (35) eingesetzt ist, der sich in Richtung der Fahrzeugbreite erstreckt, die beiden Rahmenlängsteile (21, 22) durch den unteren Querträger (35) über die jeweiligen unteren Halter (31) verbunden sind, und die Rahmenlängsteile (21, 22) aus einem kohlenstofffaserverstärkten Harzmaterial gebildet sind, so dass der untere Halter (31) eine geringere Steifigkeit als die Rahmenlängsteile (21, 22) aufweist.

2. Fahrzeugsitzstruktur nach Anspruch 1, wobei

der untere Querträger aus einem metallischen Werkstoff gebildet ist, und der untere Halter (31) mit dem Unterteil jedes der Rahmenlängsteile (21, 22) verklebt und verbunden ist.

3. Fahrzeugsitzstruktur nach Anspruch 1 oder 2, wobei

an den Unterteilen der Rahmenlängsteile (21, 22) eine

Neigungsverstellvorrichtung (39) angebracht ist,

der untere Halter (31) einen ebenen Teil aufweist, der sich in vertikaler Fahrzeugrichtung erstreckt, wobei der ebene Teil in einem dem Rahmenlängsteil (21, 22) zugewandten Zustand verklebt ist, und das Rahmenlängsteil (21, 22) durch das ebene Teil und den Neigungsverstellvorrichtung (39) eingespannt wird.

4. Fahrzeugsitzstruktur nach einem der Ansprüche 1 bis 3, wobei

eine Position P des unteren Querträgers (35) in vertikaler Fahrzeugrichtung so eingestellt ist, dass folgendes erfüllt ist:

$$h \leq P \leq H/2,$$

wobei ein Abstand in vertikaler Fahrzeugrichtung von einem unteren Ende des Sitzpolsterrahmens (11, 12) zu einer Position, die einer Hüftposition eines Insassen entspricht, h ist und ein Abstand von dem unteren Ende des Sitzpolsterrahmens (11, 12) zu einem oberen Ende des Rückenlehnenrahmens (20) H ist, und die Position P des unteren Querträgers in der Fahrzeugfront-Rückwärtsrichtung näher an einer Fahrzeugrückseite gewählt ist als eine Mitte der Breite des Rahmenlängsteils (21, 22) in der Fahrzeugfront-Rückwärtsrichtung.

## Revendications

1. Structure de siège de véhicule comprenant : une ossature arrière de siège (20) faite de résine, l'ossature arrière de siège (20) s'étendant dans une direction verticale de véhicule ; et un cadre de coussin de siège (11, 12) fait de résine, le cadre de coussin de siège (11, 12) s'étendant vers un côté avant de véhicule depuis une partie inférieure de l'ossature arrière de siège (20), l'ossature arrière de siège (20) comportant des parties d'ossature longitudinales (21, 22) qui s'étendent dans la direction verticale de véhicule et sont agencées dans les deux parties latérales dans une direction de largeur de véhicule pour être espacées l'une de l'autre, dans laquelle

chacune des parties d'ossature longitudinales (21, 22) a une partie inférieure à laquelle un support inférieur (31) s'étendant dans une direction verticale de véhicule est joint,
les supports inférieurs (31) sont constitués d'une matière métallique, **caractérisée en ce que**
un trou traversant supérieur (31c) dans lequel un élément transversal inférieur (35) s'étendant dans la direction de largeur de véhicule est inséré est formé dans une portion supérieure de chacun des supports inférieurs (31),
les deux parties d'ossature longitudinales (21, 22) sont reliées par l'élément transversal inférieur (35) par le biais des supports inférieurs (31) respectifs, et
les parties d'ossature longitudinales (21, 22) sont constituées d'une matière de résine renforcée de fibres de carbone, de sorte que le support inférieur (31) ait une rigidité inférieure aux parties d'ossature longitudinales (21, 22).

2. Structure de siège de véhicule selon la revendication 1, dans laquelle

l'élément transversal inférieur est constitué d'une matière métallique, et
le support inférieur (31) est fixé et joint à la partie inférieure de chacune des parties d'ossature longitudinales (21, 22).

3. Structure de siège de véhicule selon la revendication 1 ou 2, dans laquelle

un mécanisme d'inclinaison (39) est fixé aux parties inférieures des parties d'ossature longitudinales (21, 22),
le support inférieur (31) a une partie plane s'étendant dans la direction verticale de véhicule, la partie plane est fixée dans un état où elle fait face à la partie d'ossature longitudinale (21, 22), et
la partie d'ossature longitudinale (21, 22) est serrée par la partie plane et le mécanisme d'inclinaison (39).

4. Structure de siège de véhicule selon l'une quelconque des revendications 1 à 3, dans laquelle

une position P de l'élément transversal inférieur (35) dans la direction verticale de véhicule est définie pour satisfaire à

$$h \leq P \leq H/2,$$

où une distance verticale de véhicule depuis une extrémité inférieure du cadre de coussin de siège (11, 12) jusqu'à une position correspondant à un os de hanche d'un occupant est h et une distance depuis l'extrémité inférieure du cadre de coussin de siège (11, 12) jusqu'à une extrémité supérieure de l'ossature arrière de siège (20) est H, et
la position P de l'élément transversal inférieur dans la direction avant-arrière de véhicule est définie plus proche d'un côté arrière de véhicule qu'une partie centrale d'une largeur de la partie d'ossature longitudinale (21, 22) dans la direction avant-arrière de véhicule.

# FIG.1

# FIG.2

# FIG.3

## FIG.4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005334364 A
- JP 2004016710 A
- US 2015203013 A1
- WO 2009114660 A2
- EP 2891580 A1
- EP 2325041 A1